# EUROPEAN PATENT SPECIFICATION

(11) **EP 1 536 111 B1**
(45) Date of publication and mention of the grant of the patent: **02.08.2006**
(21) Application number: 03027141.5
(22) Date of filing: 26.11.2003
(51) Int. Cl.: F01N 3/10, F01N 3/08, F01N 9/00

(54) **Apparatus and method for removal of by-products from exhaust gases of a combustion engine**
Vorrichtung und Verfahren zur Beseitigung von Nebenprodukten aus dem Abgas einer Brennkraftmaschine
Dispositif et procédé d'élimination de sous-produits des gaz d'échappement d'un moteur à combustion interne

(43) Date of publication of application: 01.06.2005
(73) Proprietor: Ford Global Technologies, LLC., Dearborn MI 48126 (US)
(72) Inventor: Acke, Filip, 421 61 Västra Frölunda (SE); Jozsa, Peter, 414 80 Göteborg (SE); Jobson, Edward, 442 77 Romelanda (SE)
(74) Representative: Hammond, Andrew David

(56) References cited:
- EP-A1- 0 525 701
- EP-A1- 1 256 700
- DE-A1- 19 641 644
- PATENT ABSTRACTS OF JAPAN vol. 2000, no. 13, 5 February 2001 (2001-02-05) & JP 2000 279766 A (OSAKA GAS CO LTD), 10 October 2000 (2000-10-10)

## Description

### Technical field

The present invention relates to a method and an apparatus for removal of by-products from exhaust gases from a combustion engine equipped with a NOₓ reduction catalyst. This is achieved by a combination of arranging a by product reducing catalyst in the exhaust gases and by means of engine control for the control of the right temperature range and air fuel ratio range for the desired catalytic processes to take place.

### Background of the invention

When attempting to reduce the emissions of nitrogen oxides (NOₓ) from internal combustion engines, a lot of efforts have been made to modify the combustion conditions in order to reduce the NOₓ-emissions, while still maintaining the combustion efficiency at a satisfactory level.

Amongst the traditional techniques for the reduction of NOₓ-emissions may, inter alia, the technique of Exhaust Gas Recirculation (EGR) be mentioned, as well as special designs of fuel injectors and combustion chambers. Other important parameters are compression, fuel injection time and fuel injection pressure. Techniques involving water injection, the use of fuel/water emulsions and so-called Selective Catalytic Reduction (SCR) by ammonia, have also been employed. Thereby, it has been found that a one-sided optimization of the combustion efficiency often results in increased NOₓ-emissions.

Today, it is required that the NOₓ-emissions are reduced and decreased fuel consumption is expected by both customers and by international agreements like the Kyoto protocol. There are also strong demands on reduced emissions of other compounds which are potentially hazardous to the environment, e.g. hydrocarbons.

Accordingly, there is an increased need for catalytic converters which also are able to treat exhaust gases from diesel and lean burn engines. Therefore, a number of different catalytic converters have been developed and are well-known from commercial applications in e.g. vehicles.

Typically, conventional catalytic converters comprise one or several substrates, or monolith bricks as they sometimes are called. Such bricks or monoliths are often in the form of a ceramic honeycomb substrate or metallic substrates, with through passages or cells, and can be furnished with a porous surface coating.

Particles of a suitable catalyst are coated on the surface of the substrate, and the design of the coating has been optimized in order to maximise the surface area over which catalytic reactions take place. Common groups of catalysts for lean NOₓ reduction are:
1, SCR catalysts like vanadium on titanium or a base metal that is ion exchanged in zeolites. A reducing agent like ammonia or Urea is added to the exhaust in front of the catalyst.
2, NOₓ storage reduction type catalysts that often contain Ba-carbonates in close connection to noble metals like Pt and Rh dispersed on a support like Ceria. The stored NOₓ is periodically regenerated by rich exhaust conditions.
3, HC-SCR catalysts like Cu-zeolites or silver or aluminium or noble metals, where hydrocarbons are dosed to the exhaust gas in front of the catalyst.
There are also a number of other catalytic systems which may be applied.

It is also previously known to use crystalline aluminium silicates, so-called zeolites, loaded with a suitable catalyst. The use of zeolites in connection with the catalytic conversion of exhaust gases is disclosed in e.g. EP 0 499 931 Al and EP 0 445 408 A.

Furthermore, it is also previously known to combine several different catalytic substrates, or to arrange a so-called after-burner in the catalytic conversion process. Such arrangements are disclosed in e.g. U.S. Patent No. 5 465 574.

It is also previously known to use a honeycomb monolith of corrugated metal foil, having a suitable catalyst carried or supported on its surface.

It has also been suggested, e.g. in EP 0 483 708 A1, to combine a conventional ceramic catalytic converter with an electrically heatable catalytic converter in order to ensure that the optimum temperature for catalytic conversion is maintained.

Thus, a number of different catalyst materials, devices, and arrangements for the catalytic conversion of exhaust gases have been described in the art.

A) NOₓ + HₓC_{y} → N₂ + H₂O + CO₂ + CO

and

B) O₂ + HₓC_{y} →H₂O + CO₂

Acidic catalysts (H+) and acidic zeolites, doped with Ag or other suitable catalysts, have been found to be selective in the sense that NO₂ will readily be converted, whereas NO will not. This can be a great disadvantage since NO is predominant in "lean" exhaust gases from e.g. diesel and lean burn engines.

Normally, the following main reactions will take place over a conventional Pt-catalyst:

C) NO + 1/2 O₂ → NO₂

D) O₂ + HₓC_{y} → H₂O+ CO₂

E) 2 NO + HₓC_{y} → N₂O + H₂O + CO₂

In a NOₓ storage reduction type catalyst as described e. g. in US 5 740 669 a NOₓ absorbent is used for removing the NOₓ in the exhaust gas (a so called NOₓ trap). The NOₓ absorbent absorbs NOₓ in the exhaust gas when the air-fuel ratio of the exhaust gas is lean and releases the absorbed NOₓ and reduces it to nitrogen when the air-fuel ratio of the exhaust gas is rich or stoichiometric. To prevent the NOₓ absorbent from being saturated with the absorbed NOₓ, the NOₓ absorbent must be regenerated periodically by causing the NOₓ in the absorbent to be released and reduced.

In the described methods for the removal of NOₓ in the exhaust gas, there is under certain circumstance an undesired residue of NOₓ in the catalytically converted exhasust gases. Many attempts have been made to solve this problem with different types of catalysts, by means of combining different catalysts, and by means of adding an additional amount of hydrocarbon to the exhaust gases in order to deacrease NOₓ with a sufficient amount of hydrocarbon. When the engine runs rich secondary air supply can enhance the byproduct conversion further.

However, many of the previous solutions have been associated with the problem of undesired oxidation of hydrocarbons (HₓC_{y}) over at least some surfaces of the oxidation catalyst, which preferably only should catalyse oxidation of nitrogen monoxide (NO) into nitrogen dioxide (NO₂), according to reaction C).

Another disadvantage associated with many previously known catalysts is that, during certain conditions, they will catalyse reaction E) which produces dinitrogen oxide (N₂O).

This reaction is undesired and it is preferred that the nitrogen oxides (NOₓ) in the exhaust gases are converted into nitrogen (N₂) to the highest possible degree, and not into dinitrogen oxide (N₂O).

During control of an engine it is further desired to operate the engine for short periods with a deficiency of oxygen, so called rich operation of the engine, in order to regenerate the NOₓ trap. A drawback occurring at rich operation of the engine is that during these periods of rich operation hydrocarbons, HC, are present to some extent in the exhaust gases. Further, nitrous oxide, N₂O, is formed over a catalyst, in particular over a Pt containing catalyst.

One document connected to N₂O treatment is EP 01027919 A3 (D1). In said document it is disclosed a method and a system for treating exhaust gases generated by a diesel engine by locating two catalyst components in the engine exhaust gas passage. The first catalyst component which is exposed to oxidizing diesel exhaust is located nearest the engine and is a nitrogen oxide absorbent. The second component is a catalyst such as a lean-NOₓ catalyst which is capable of converting the exhaust gas passing over it including reducing oxides desorbed from the first component into nitrogen (N₂) or nitrous oxide (N₂O). Materials like hydrocarbons or ammonia or urea may be injected into the vicinity of the second catalyst to aid in the reaction.

JP 2001182530 (D2) describes an oxidation catalyst capable of oxidizing at least methane and a trap catalyst trapping NOₓ jointly used. A combustion air-fuel ratio for an engine is controlled to a rich side of a theoretical air-fuel ratio necessary.

Document D1 does not mention how to reduce nitrous oxide from the exhaust gas and D2 does not mention treatment of N₂O at all. Little has been described in the art about actions to decrease by-product, such as methane and nitrous oxide formation, in NOₓ reduction emission control systems.

A purpose of the present invention is to provide an apparatus and a method for the reduction of hydrocarbons and nitrous oxide in the exhaust gases during periods of operation of a combustion engine, particularly during rich operation of the said engine.
EP 1 256 700 (D3) describes an apparatus for purifying exhaust gas from a combustion engine. The apparatus includes means for parameter tuning of the engine and a NOx reduction catalyst including means for NOx reduction. The apparatus is further provided with a catalyst containing a noble metal catalyst. Said apparatus is not aimed at reducing hydrocarbons or nitrous oxide in the exhaust gas of the combustion engine. Thus, the parameter tuning does not, specifically, involve control of the engine for the reduction of the amount of hydrocarbons and/or nitrous oxide in the exhaust gas.
DE 196 41 644 (D4) describes an apparatus used in process industry for making noble gases cleaner when decomposing air to produce noble gases. The apparatus is thus provided with a catalyst for reducing methane and nitrous oxide from a gas mixture during the process. The catalyst used for this purpose is Palladium. Both the amount of methane and nitrous oxide are reduced from the gas mixture by use of Palladium as the catalyst during said process of stationary process conditions. This process is not verified to be applicable during non-stationary conditions of the kind occurring in a combustion engine. Further, an optimization of the catalysts for the specific reduction of the amount of each of hydrocarbons and nitrous oxide is not possible with the use of one single catalyst for both substances. It is further not known how the chemical reactions are affected by a parameter tuning of the engine when using a single specific catalyst.

### SUMMARY OF THE INVENTION

According to a first aspect of the present invention there is presented an apparatus for the removal of methane, CH₄, and nitrous oxide, N₂O, from the exhaust gases of a combustion engine during operation of the engine, particularly during rich operation of the engine, wherein the apparatus further comprises:
- means for parameter tuning of the engine,
- a NOₓ reduction catalyst including means for NOₓ reduction and
- catalysts for reducing methane and/or nitrous oxide in the exhaust gases of the engine.

The actions to be taken for arriving at the first aspect of the invention are to:
- make arrangements for keeping the exhaust gases within the right temperature range, sufficient for methane oxidation and above N₂O equilibrium. N₂O is in equilibrium with NO and NO₂ between 200°C and 350°C (depending on partial pressures of oxygen and NOₓ),
- make arrangements for remaining in the right air-fuel ratio range. This is achieved by controlling the engine and the combustion in such a way that rich operation is accomplished during short periods, whereby ammonia generation is avoided. Further, avoiding too rich operation keeps the generation of ammonia at a low level. The engine is controlled such that the combustion conditions are close to an air-fuel ratio, where the generation of nitrous gas, N₂O, can be kept at a low level. To stay in the right air-fuel ratio is further important to avoid hysteresis effects on the reduction of methane, and
- control the engine for reduction of emissions of methane out of the engine. This step is achieved by means of modifying engine parameters such as: EGR (Exhaust Gas Recirculation), injection timing, inlet gas (air+egr) temperature, boost pressure, valve timing and injection pressure.

NOₓ reduction is achieved by use of at least one of: means for fuel injection timing, means for control of fuel injection length or pressure, means for valve timing, means for throttling, means for controlling engine air compressor, means for control of engine inlet gas temperature and injector for reducing agent in the exhaust pipe upstream the catalyst.

The parameter tuning of the engine is achieved by controlling the engine by use of at least one of the parameters, engine torque, engine speed, value of content of NOₓ in exhaust gases, lambda probe signal level.

Said means listed for arriving at NOₓ reduction and said means for achieving parameter tuning are well known in the art and will not be described in more details herein.

For the reduction of methane Paladium, Pd, can be used as a catalyst. A particle filter may be used for hosting the catalyst. The catalyst is further, at least in a preferred embodiment, an NSR (Nitrogen Storing Reduction) type catalyst, which may have Ceria or Zirconia components as oxygen storing components (OSC).

For the reduction of nitrous oxide Fe-zeolite may be used as the catalytic agent.

According to a second aspect of the present invention there is presented a method for the removal of methane, CH₄, and nitrous oxide, N₂O, from the exhaust gases of a combustion engine during operation of the engine, particularly during rich operation of the engine, as stated in the independent method claim. Further aspects of the method are listed in the dependent method claims.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

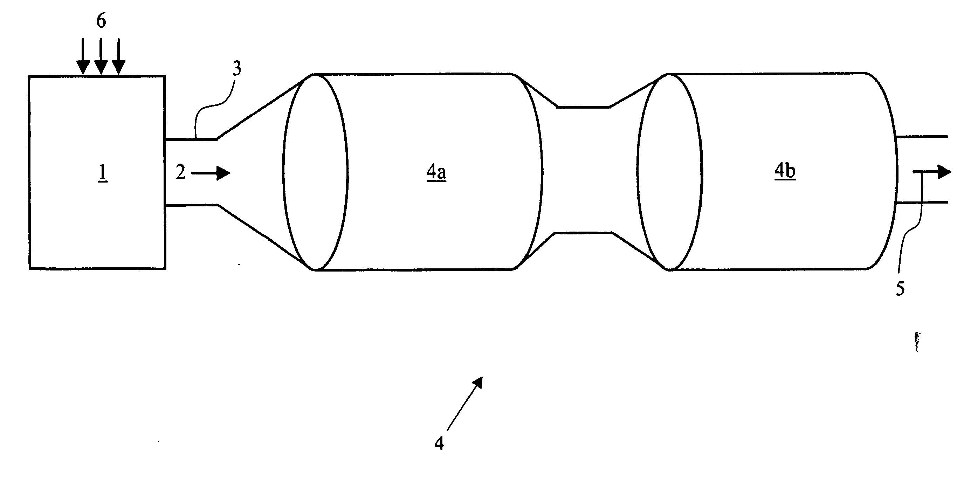

### BRIEF DESCRIPTION OF THE DRAWING

The enclosed figure is a schematical illustration of a system description of a device for the removal of by-products from exhaust gases from an engine.

### EMBODIMENTS OF THE INVENTION

In the following a number of embodiments of the present invention will be described with support by the enclosed drawing.

In the enclosed figure a combustion engine is symbolized by a block denoted with the reference numeral 1. Exhaust gases 2 are lead through an exhaust pipe 3 to a catalyst device 4. In the disclosed embodiment the catalyst device is divided into two parts, a primary catalyst 4a and a secondary catalyst 4b. The primary catalyst 4a is, in the described example, an NSR type catalyst, known in the art as described above, with NOₓ storing and reduction properties. The secondary catalyst 4b is a clean-up catalyst taking care of remaining undesired by-products in the exhaust gases let out from the primary catalyst 4a. Exhaust gases released to the atmosphere are denoted by reference numeral 5. The arrows denoted by 6 indicates signals for the control of the engine by means of parameters and control signals as described in paragraphs 28, 29 and 30.

The secondary catalyst 4b contains catalysts for reducing, according to a preferred embodiment of the invention, the content of methane or nitrous oxide or both methane and nitrous oxide in combination, from the exhaust gases. This is accomplished in combination with engine control, where measures are performed to control the engine by means of parameters which tune the engine for minimizing the formation of methane and/or nitrous gas from the engine.

Further, the engine is arranged to remain in a correct air-fuel ratio by a control of the engine and the combustion in such a way that rich operation is accomplished during short periods. Measures for such operation of the engine are known in the art, whereby the provisions of details for such control are not described herein. Still further, a reading of at least one of the values: engine torque, engine speed, exhaust mass flow, value of content of NOₓ in exhaust gases and lambda probe signal for modifying engine parameters like fuel injection timing, fuel injection length, fuel injection pressure, valve timing, throttling, air compressor control, inlet gas temperature, to control the engine to stay in a predetermined air fuel ratio, is each a measure known in the art and is also not described herein.

Housed in the secondary catalyst a first catalytic agent for the reduction of nitrous oxide is present. As an example, without being restricted to such use, the first catalytic agent of the disclosed embodiment is Fe zeolite.

Also housed in the secondary catalyst a second catalytic agent is provided for the reduction of methane present in the exhaust gas downstream the primary catalyst. Without being restricted to such use, a Pd-selective catalyst is arranged for use as the second catalytic agent for said methane reduction.

In one embodiment of the invention the first catalytic agent is provided in a first layer of the catalyst, wherein the second catalytic agent is provided in a second layer of the catalyst.

In another embodiment of the invention the methane reducing catalyst and/or the nitrous oxide reducing catalyst is arranged in a separate monolith

In still another embodiment of the invention the methane reducing catalyst and/or the nitrous oxide reducing catalyst is arranged in a powder penetrated by the exhaust gases.

In still a further embodiment of the invention the catalyst compounds are arranged in the same housing, wherein the methane reducing catalyst and/or the nitrous oxide reducing catalyst is arranged in a catalyst powder mixed with the NOₓ reduction catalyst.

Below a short description of the process according to the invention follows. Engine gases let out from the engine during rich or lean operation are substantially: CO₂, NO, O₂, HₓC_{y}, (CH₄), CO, H₂O. Hydrocarbons are indicated by HₓC_{y}, wherein methane is indicated as the substance which according to the invention is removed by means of a processing in the secondary catalyst.

In a regeneration step processed in the primary catalyst nitrogen oxide, NO, and nitrogen dioxide, NO₂, are over the first catalyst reduced to nitrogen, N₂, according to the schematic reaction:

NO/NO₂ + reducing agent → N₂ (H₂O and or CO₂)

By-products from the reaction are water and/or carbon dioxide.

As discussed above another undesired reaction will take place in the primary catalyst, wherein nitrogen dioxide over the reducing agent will be reduced to nitrous oxide, N₂O, according to the simplified formula:

NO₂ + reducing agent → N₂O (H₂O and or CO₂)

In the secondary catalyst methane is oxidized into carbon dioxide and water over a Pd-selective catalyst (that is a catalyst selective for the reaction between methane and oxygen), according to the formula:

CH₄ + O₂ → CO₂ + H₂O

Nitrous oxide generated in the primary catalyst will be processed in the secondary catalyst according to the formula:

N₂O + reducing agent → N₂ (H₂O + CO₂),

wherein nitrous oxide is converted into nitrogen, N₂, be means of the first catalytic agent. By-products at the reaction are water and carbon dioxide.

As obvious from the reactions taking place in the secondary catalyst the gas components released to the atmosphere are nitrogen, water and carbon dioxide.

As a further measure to improve the efficiency of the reduction process during rich running of the engine, as described, secondary air may be added to the exhaust gases by means of an air pump providing air upstream of the catalyst.

## Claims

1. An apparatus for the removal of methane, CH₄, and nitrous oxide, N₂O, from the exhaust gases during operation of a combustion engine (1), comprising:
- means for parameter tuning of the engine, and
- a NOₓ reduction catalyst including means for NOₓ reduction,
**characterized in that** the apparatus further has
- a first catalytic agent for oxidation of nitrous oxide leading into a reduction of the amount of nitrous oxide in the exhaust gases of the engine and a second catalytic agent for oxidation of methane leading into a reduction of the amount of methane in the exhaust gases of the engine.

2. The apparatus according to claim 1, wherein said NOₓ reduction catalyst is housed in a primary catalyst (4a).

3. The apparatus according to claim 2, wherein said first and second catalytic agents for reducing the amount of nitrous oxide and methane are housed in a secondary catalyst (4b) downstream of said primary catalyst.

4. The apparatus according to claim 1 or 2, wherein said NOₓ reduction catalyst is an NSR (Nitrogen Storage Reduction) catalyst.

5. The apparatus according to claim 1 or 4, wherein said means for NOₓ reduction is at least one chosen from the group of: means for fuel injection timing, means for control of fuel injection length, means for control of fuel injection pressure, means for valve timing, means for throttling, means for controlling engine air compressor, means for control of engine inlet gas temperature.

6. The apparatus according to any one of claims 1, 4 and 5, wherein said parameter tuning of the engine is controlled by at least one of the parameters chosen from the group of: engine torque, engine speed, value of content of NOₓ in exhaust gases, lambda probe signal.

7. The apparatus according to any of the preceding claims, wherein the second catalytic agent for reducing the amount of methane is Pd.

8. The apparatus according to claim 7, wherein a particle filter is a host for the Pd catalyst.

9. The apparatus according to any of the preceding claims, wherein the first catalytic agent for reducing the amount of nitrous oxide is Fe-zeolite.

10. The apparatus according to any of the preceding claims, wherein the first catalytic agent and/or the second catalytic agent is arranged in a separate monolith.

11. The apparatus according to any of the preceding claims, wherein the second catalytic agent is arranged in a first layer of the catalyst and the first catalytic agent is arranged in a second layer.

12. The apparatus according to any of claims 1 to 10, wherein the first catalytic agent and/or the second catalytic agent is arranged in a catalyst powder.

13. The apparatus according to any one of claims 1, 2, 5 and 6, wherein the first catalytic agent and/or the second catalytic agent is arranged in a catalyst powder mixed with the NOₓ reduction catalyst.

14. The apparatus according to any one of claims 1, 2, 5 and 6, wherein secondary air is supplied to enhance the by-product conversion.

15. A method for the removal of methane, CH₄, and nitrous oxide, N₂O, from exhaust gases during operation of a combustion engine, particularly during rich operation of the engine, comprising the step:
- reading at least one of the values in the group of engine torque, engine speed, exhaust mass flow, value of content of NOₓ in exhaust gases, lambda probe signal, and further **characterized by** the steps of:
- modifying, as a function of said reading, engine parameters to control the engine to stay in a predetermined air fuel ratio to lower the content of at least one of NOₓ and CH₄ in the exhaust gases,
- reducing the amount of methane and nitrous oxides present in the exhaust gases utilizing a first catalytic agent for oxidizing nitrous oxide and a second catalytic agent for oxidizing methane.

16. The method according to claim 15, further comprising the step of:
- said modifying of the engine parameters comprising modifying at least one parameter from the group of: fuel injection timing, fuel injection length, fuel injection pressure, valve timing, throttling, air compressor control, inlet gas temperature.

17. The method according to claim 16, further comprising the step of:
- reducing said NOₓ in an NSR (Nitrogen Storage Reduction) catalyst.

18. The method according to claim 17, further comprising the step of:
- releasing said NOₓ after a storage step by choosing at least one from the means in the group of: means for fuel injection timing, means for control of fuel injection length, means for control of fuel injection pressure, means for valve timing, means for throttling, means for controlling engine air compressor, means for control of engine inlet gas temperature.

19. The method according to any of claims 15 to 18, further comprising the step of:
- housing said NOₓ reduction catalyst in a primary catalyst.

20. The method according to any of claims 15 to 19, further comprising the step of:
- housing said first and said second catalytic agent in a secondary catalyst.

21. The method according to any of claims 15 to 20, further comprising the step of:
- utilizing means for keeping the exhaust gases within a temperature range other than close to N₂O equilibrium.

22. The method according to any of claims 15 to 21, further comprising the step of:
- arranging the engine to remain in a correct air-fuel ratio by controlling the engine and the combustion in such a way that rich operation is accomplished during short periods.

## Patentansprüche

1. Vorrichtung zum Entfernen von Methan, CH₄, und Stickoxiden, N₂O, aus den Abgasen während des Betriebs einer Brennkraftmaschine (1), mit:
- Mitteln für die Parameterabstimmung der Maschine und
- einem NOₓ-Reduzierungskatalysator, der Mittel für die NOₓ₋Reduzierung enthält,
**dadurch gekennzeichnet, dass** die Vorrichtung ferner umfasst:
- ein erstes katalytisches Mittel für die Oxidation von Stickoxiden, die zu einer Verringerung der Menge an Stickoxiden in den Abgasen der Maschine führt, und ein zweites katalytisches Mittel für die Oxidation von Methan, die zu einer Verringerung der Menge an Methan in den Abgasen der Maschine führt.

2. Vorrichtung nach Anspruch 1, bei der der NOₓ-Reduzierungskatalysator in einem primären Katalysator (4a) untergebracht ist.

3. Vorrichtung nach Anspruch 2, bei der das erste und das zweite katalytische Mittel für die Verringerung der Menge an Stickoxiden bzw. an Methan in einem sekundären Katalysator (4b) stromabwärtig von dem primären Katalysator untergebracht sind.

4. Vorrichtung nach Anspruch 1 oder 2, bei der der NOₓ₋Reduzierungskatalysator einen NSR-Katalysator (Stickstoffspeicherungs- und Stickstoffreduzierungskatalysator) ist.

5. Vorrichtung nach Anspruch 1 oder 4, bei der die Mittel für die NOₓ₋Reduzierung wenigstens eines aus der folgenden Gruppe sind: Mittel für die Steuerung des Kraftstoffeinspritzzeitpunkts, Mittel für die Steuerung der Kraftstoffeinspritzlänge, Mittel für die Steuerung des Kraftstoffeinspritzdrucks, Mittel für die Ventilzeitsteuerung, Mittel für die Drosselklappensteuerung, Mittel für die Steuerung des Maschinen-Luftkompressors und Mittel für die Steuerung der Maschineneinlassgas-Temperatur.

6. Vorrichtung nach einem der Ansprüche 1, 4 und 5, bei der die Parameterabstimmung der Maschine durch wenigstens einen der Parameter gesteuert wird, der aus der folgenden Gruppe ausgewählt ist: Maschinendrehmoment, Maschinendrehzahl, Wert des Gehalts an NOₓ in den Abgasen, Lambdasonden-Signal.

7. Vorrichtung nach einem der vorhergehenden Ansprüche, bei der das zweite katalytische Mittel für die Verringerung der Methanmenge Pd ist.

8. Vorrichtung nach Anspruch 7, bei der ein Partikelfilter ein Wirt für den Pd-Katalysator ist.

9. Vorrichtung nach einem der vorhergehenden Ansprüche, bei der das erste katalytische Mittel für die Verringerung der Stickoxidmenge Fe-Zeolith ist.

10. Vorrichtung nach einem der vorhergehenden Ansprüche, bei der das erste katalytische Mittel und/oder das zweite katalytische Mittel in einem separaten Monolithen angeordnet sind.

11. Vorrichtung nach einem der vorgehenden Ansprüche, bei der das zweite katalytische Mittel in einer ersten Schicht des Katalysators angeordnet ist und das erste katalytische Mittel in einer zweiten Schicht angeordnet ist.

12. Vorrichtung nach einem der Ansprüche 1 bis 10, bei der das erste katalytische Mittel und/oder das zweite katalytische Mittel in einem Katalysatorpulver angeordnet sind.

13. Vorrichtung nach einem der Ansprüche 1, 2, 5 und 6, bei der das erste katalytische Mittel und/oder das zweite katalytische Mittel in einem Katalysatorpulver angeordnet sind, das mit dem NOₓ₋Reduzierungskatalysator gemischt ist.

14. Vorrichtung nach einem der Ansprüche 1, 2, 5 und 6, bei der Sekundärluft zugeführt wird, um die Nebenproduktumsetzung zu steigern.

15. Verfahren für die Entfernung von Methan, CH₄ und von Stickoxiden, N₂O aus den Abgasen während des Betriebs einer Brennkraftmaschine, insbesondere während eines fetten Betriebs der Maschine, das die folgenden Schritte umfasst:
- Lesen wenigstens eines der Werte der folgenden Gruppe: Maschinendrehmoment, Maschinendrehzahl, Abgasmassendurchfluss, Wert des NOₓ-Gehaltes in den Abgasen, Lambdasonden-Signal, und ferner **gekennzeichnet durch** die folgenden Schritte:
- Modifizieren von Maschinenparametern in Abhängigkeit von den Ablesungen, um die Maschine so zu steuern, dass sie in einem vorgegebenen Luft-/Kraftstoff-Verhältnis bleibt, um den Gehalt von NOₓ und/oder von CH₄ in den Abgasen zu senken,
- Verringern der Menge an Methan und an Stickoxiden, die in den Abgasen vorhanden sind, unter Verwendung eines ersten katalytischen Mittels für die Oxidation der Stickoxide und eines zweiten katalytischen Mittels für die Oxidation von Methan.

16. Verfahren nach Anspruch 15, das ferner den folgenden Schritt umfasst:
- Modifizieren der Maschinenparameter, das das Modifizieren wenigstens eines der Parameter aus der folgenden Gruppe umfasst: Kraftstoffeinspritzzeitpunkt, Kraftstoffeinspritzlänge, Kraftstoffeinspritzdruck, Ventilzeitsteuerung, Drosselklappensteuerung, Luftkompressorsteuerung, Einlassgastemperatur.

17. Verfahren nach Anspruch 16, das ferner den folgenden Schritt umfasst:
- Reduzieren von NOₓ in einem NSR-Katalysator (Stickstoffspeicherungs- und Stickstoffreduzierungskatalysator).

18. Verfahren nach Anspruch 17, das ferner den folgenden Schritt umfasst:
- Freisetzen von NOₓ nach einem Speicherungsschritt durch Wählen wenigstens eines der Mittel aus der folgenden Gruppe: Mittel für die Steuerung der Kraftstoffeinspritzzeit, Mittel für die Steuerung der Kraftstoffeinspritzlänge, Mittel für die Steuerung des Kraftstoffeinspritzdrucks, Mittel für die Ventilzeitsteuerung, Mittel für die Drosselklappensteuerung, Mittel für die Steuerung des Maschinen-Luftkompressors und Mittel für die Steuerung der Maschineneinlassgas-Temperatur.

19. Verfahren nach einem der Ansprüche 15 bis 18, das ferner den folgenden Schritt umfasst:
- Unterbringen des NOₓ-Reduzierungskatalysators in einem primären Katalysator.

20. Verfahren nach einem der Ansprüche 15 bis 19, das ferner den folgenden Schritt umfasst:
- Unterbringen des ersten und des zweiten katalytischen Mittels in einem sekundären Katalysator.

21. Verfahren nach einem der Ansprüche 15 bis 20, das ferner den folgenden Schritt umfasst:
- Verwenden von Mitteln, um die Abgase in einem Temperaturbereich zu halten, der nicht in der Nähe des N₂O-Gleichgewichts liegt.

22. Verfahren nach einem der Ansprüche 15 bis 21, das ferner den folgenden Schritt umfasst:
- Anordnen der Maschine in der Weise, dass er in einem korrekten Luft/Kraftstoff-Verhältnis bleibt, in dem die Maschine und die Verbrennung in der Weise gesteuert werden, dass während kurzer Perioden ein fetter Betrieb erzielt wird.

## Revendications

1. Appareil d'élimination de méthane, CH₄, et d'oxyde nitreux, N₂O, à partir des gaz d'échappement pendant le fonctionnement d'un moteur à combustion (1), comportant :
- des moyens pour régler les paramètres du moteur, et
- un catalyseur de réduction de NOₓ incluant des moyens de réduction de NOₓ,
**caractérisé en ce que** l'appareil a de plus
- un premier agent catalytique pour l'oxydation d'oxyde nitreux entraînant une réduction de la quantité d'oxyde nitreux dans les gaz d'échappement du moteur et un second agent catalytique pour l'oxydation de méthane entraînant une réduction de la quantité de méthane dans les gaz d'échappement du moteur.

2. Appareil selon la revendication 1, dans lequel ledit catalyseur de réduction de NOₓ est enfermé dans un catalyseur primaire (4a).

3. Appareil selon la revendication 2, dans lequel lesdits premier et second agents catalytiques destinés à réduire la quantité d'oxyde nitreux et de méthane sont enfermés dans une catalyseur secondaire (4b) en aval dudit catalyseur primaire.

4. Appareil selon la revendication 1 ou 2, dans lequel ledit catalyseur de réduction de NOₓ est un catalyseur NSR (Réduction d'Azote au cours du Stockage).

5. Appareil selon la revendication 1 ou 4, dans lequel lesdits moyens de réduction de NOₓ sont au moins l'un choisi parmi le groupe constitué de : des moyens de calage d'injection de carburant, des moyens de commande de longueur d'injection de carburant, des moyens de commande de pression d'injection de carburant, des moyens de calage de soupapes, des moyens d'étranglement, des moyens de commande de compresseur d'air moteur, des moyens de commande de température de gaz d'entrée du moteur.

6. Appareil selon l'une quelconque des revendications 1, 4 et 5, dans lequel ledit réglage de paramètres du moteur est commandé par au moins un des paramètres choisis parmi le groupe constitué de : couple moteur, vitesse du moteur, valeur de la teneur en NOₓ dans des gaz d'échappement, signal de sonde lambda.

7. Appareil selon l'une quelconque des revendications précédentes, dans lequel le second agent catalytique destiné à réduire la quantité de méthane est Pd.

8. Appareil selon la revendication 7, dans lequel un filtre à particules est un hôte pour le catalyseur de Pd.

9. Appareil selon l'une quelconque des revendications précédentes, dans lequel le premier agent catalytique destiné à réduire la quantité d'oxyde nitreux est Fe-zéolite.

10. Appareil selon l'une quelconque des revendications précédentes, dans lequel le premier agent catalytique et/ou le second agent catalytique sont agencés dans un monolithe séparé.

11. Appareil selon l'une quelconque des revendications précédentes, dans lequel le second agent catalytique est agencé dans une première couche du catalyseur et le premier agent catalytique est agencé dans une seconde couche.

12. Appareil selon l'une quelconque des revendications 1 à 10, dans lequel le premier agent catalytique et/ou le second agent catalytique sont agencés dans une poudre de catalyseur.

13. Appareil selon l'une quelconque des revendications 1, 2, 5 et 6, dans lequel le premier agent catalytique et/ou le second agent catalytique sont agencés dans une poudre de catalyseur mélangée au catalyseur de réduction de NOₓ.

14. Appareil selon l'une quelconque des revendications 1, 2, 5 et 6, dans lequel de l'air secondaire est alimenté pour accentuer la conversion de sous-produits.

15. Procédé pour éliminer du méthane, CH₄, et de l'oxyde nitreux, N₂O, à partir de gaz d'échappement pendant le fonctionnement d'un moteur à combustion , en particulier pendant l'opération riche du moteur, comportant les étapes consistant à :
- lire au moins une des valeurs du groupe constitué du couple moteur, vitesse du moteur, écoulement massique d'échappement, valeur de teneur en NOₓ dans des gaz d'échappement, signal de sonde lambda, et **caractérisé de plus par** les étapes consistant à :
- modifier, en fonction de ladite lecture, des paramètres moteur pour obliger le moteur à rester à un rapport air-carburant prédéterminé afin de diminuer la teneur en au moins l'un parmi NOₓ et CH₄ dans les gaz d'échappement,
- réduire la quantité de méthane et d'oxydes nitreux présents dans les gaz d'échappement en utilisant un premier agent catalytique pour oxyder l'oxyde nitreux et un second agent catalytique pour oxyder le méthane.

16. Procédé selon la revendication 15, comportant de plus l'étape consistant à :
- modifier les paramètres moteur comportant la modification d'au moins un moins paramètre parmi le groupe constitué de : calage d'injection de carburant, longueur d'injection de carburant, pression d'injection de carburant, calage de soupapes, étranglement, commande de compresseur d'air, température de gaz d'entrée.

17. Procédé selon la revendication 16, comportant de plus l'étape consistant à :
- réduire lesdits NOₓ dans un catalyseur NSR (Réduction d'Azote au cours du Stockage).

18. Procédé selon la revendication 17, comportant de plus l'étape consistant à :
- libérer lesdits NOₓ après une étape de stockage en choisissant au moins l'un des moyens du groupe constitué de : moyens de calage d'injection de carburant, moyens de commande de longueur d'injection de carburant, moyens de commande de pression d'injection de carburant, moyens de calage de soupapes, moyens d'étranglement, moyens de commande de compresseur d'air de moteur, moyens de commande de température de gaz d'entrée de moteur.

19. Procédé selon l'une quelconque des revendications 15 à 18, comportant de plus l'étape consistant à :
- enfermer ledit catalyseur de réduction de NOₓ dans un catalyseur primaire.

20. Procédé selon l'une quelconque des revendications 15 à 19, comportant de plus l'étape consistant à :
- enfermer lesdits premier et second agents catalytiques dans un catalyseur secondaire.

21. Procédé selon l'une quelconque des revendications 15 à 20, comportant de plus l'étape consistant à :
- utiliser des moyens pour maintenir les gaz d'échappement dans une plage de températures autre que celle proche d'un équilibre de N₂O.

22. Procédé selon l'une quelconque des revendications 15 à 21, comportant de plus l'étape consistant à :
- concevoir le moteur pour rester dans un rapport air-carburant correct en commandant le moteur et la combustion de telle sorte que l'opération riche est effectuée pendant de courtes périodes.
